# EUROPEAN PATENT SPECIFICATION

(11) **EP 3 351 901 B1**
(45) Date of publication and mention of the grant of the patent: **27.11.2019**
(21) Application number: 17000969.0
(22) Date of filing: 07.06.2017
(51) Int. Cl.: G01C 21/20, A01B 79/00, G05D 1/02, A01B 69/04, B60W 30/10, G01C 21/14, G09B 29/10

(54) **WORK VEHICLE**
NUTZFAHRZEUG
VÉHICULE DE TRAVAIL

(30) Priority: 20.01.2017 JP 2017008360
(43) Date of publication of application: 25.07.2018
(73) Proprietor: Kubota Corporation, Osaka-shi, Osaka 556-8601 (JP)
(72) Inventor: Sakaguchi, Kazuo, Amagasaki, Hyogo 661-8567 (JP); Shimamoto, Izuru, Amagasaki, Hyogo 661-8567 (JP); Tamatani, Kenji, Amagasaki, Hyogo 661-8567 (JP); Suzukawa, Megumi, Amagasaki, Hyogo 661-8567 (JP); Shinkai, Atsushi, Sakai-city, Osaka 590-0823 (JP)
(74) Representative: Müller-Boré & Partner Patentanwälte PartG mbB

(56) References cited:
- EP-A1- 3 104 244
- US-A1- 2008 269 956

## Description

### [Technical Field]

The present invention relates to a work vehicle including a display which is capable of displaying a target travel route in a work field.

### [Background Art]

As the foregoing work vehicle, a work vehicle described in Patent Literature 1 is already known, for example. JP 9-178481 A describes a configuration in which a shape of a work field and a travel route suitable for travel performed by manual driving within the work field are displayed on a display ("a display screen of a display device" in JP 9-178481 A).

US 2008/269956 A1 discloses a GPS-based vehicle guidance system method for providing an integrated display for the operator of a vehicle and provides determining the ideal swath path based on predetermined and user inputted parameters. The method is applied to both manual and automatic modes of operation, and includes the use of an integrated display that clearly indicates whether the system is operating in chase or pull mode of operation with continuous indicators. The method also includes providing guidance to the vehicle operator at the beginning of the process and during end of row turns, to enable the vehicle to align with the predetermined swath paths.

EP 3 104 244 A1 discloses an autonomous travel work vehicle, which is provided with a position calculation means that measures the device body position by means of a satellite positioning system, a steering actuator that operates a steering device, an engine rotation control means, a transmission means, and a control device that controls each of same, is caused to autonomously travel, along a set travel path stored in the control device, by an accompanying travel work vehicle that works while accompanying the travel of the autonomous travel work vehicle by means of attended operation and that is mounted with a remote operation device that can operate the autonomous travel work vehicle, and the control device halts autonomous travel when a signal disruption from the satellites, a large deviation from the set travel path, an abnormal sensor value, fuel exhaustion, or the like is detected.

### [Summary of Invention]

### [Technical Problems]

When a work vehicle is caused to travel along a target travel route by automatic driving or manual driving, a target travel route and an actual travel track deviate from each other under the influence of irregularities in a work field, a skid, or the like, in some cases.

Then, in a spot where a target travel route and an actual travel track deviate from each other, appropriate work may not probably be conducted. For example, in a case where a work vehicle is a tractor and a cultivating operation is performed in a work field, a spot where a target travel route and an actual travel track deviate from each other may probably be uncultivated.

Accordingly, it becomes necessary to cope with a spot where a target travel route and an actual travel track deviate from each other, by performing additional work travel or the other like operations.

However, the work vehicle described in the above JP 9-178481 A does not include a configuration which can inform an operator of a spot where a target travel route and an actual travel track deviate from each other. Accordingly, in a case where the work vehicle described in the above JP 9-178481 A is used, an operator has difficulties in grasping a spot where a target travel route and an actual travel track deviate from each other.

It is an object of the present invention to provide a work vehicle which allows an operator to easily grasp a spot where a target travel route and an actual travel track deviate from each other.

### [Solutions to Problems]

The present invention provides for a system according to claim 1, and for a work vehicle comprising this system according to claim 2.

According to the invention, a portion where the work vehicle has traveled in the target travel route displayed on the display is color-coded in accordance with a degree of a deviation of an actual travel track from the target travel route. This may allow an operator to easily grasp a spot where the target travel route and an actual travel track deviate from each other. Accordingly, in some circumstances, for example, when the operator sees by the display that the actual track is deviating from the target travel route to an unacceptable degree, the operator may operate the work vehicle (e.g. using a steering wheel of the work vehicle) to account for the deviation so that the work vehicle can more closely follow the target travel route. Thus, in some circumstances, the color-coded display in various aspects and examples described herein may provide improved, continued man-machine interaction.

Further, in some examples, an operator may be allowed to distinguish a portion where the work vehicle has traveled from a portion where the work vehicle has not traveled in the target travel route. Accordingly, an operator can intuitively grasp what percentage of travel along a whole of the target travel route is finished.

Further, in some examples, it is preferable in the present disclosure that the work vehicle further includes an own-vehicle direction detection device which is configured to detect a direction of travel of an own vehicle, and that the index value is a directional deviation which is a deviation of the direction of the travel of the own vehicle from a direction of the target travel route.

A direction of travel of an own vehicle and a direction of the target travel route can be measured with a relatively small error. Accordingly, it may be possible to reduce an error in an index value to a relatively small amount by adopting a directional deviation as an index value.

Therefore, with the above-described configuration, an error in an index value may be relatively small, so that accuracy in color-coding of the target travel route which is performed by the color-coding operation device can be improved.

Further, in some examples, it is preferable in the present disclosure that the work vehicle further comprises an own-vehicle position detection device which is configured to detect a position of an own vehicle, and that the index value is a positional deviation which is a deviation of the position of the own vehicle from the target travel route.

Even in a case where a directional deviation which is a deviation of a direction of travel from a direction of the target travel route is relatively small, a situation may be expected, in which continuous travel in a certain direction of travel results in an increased positional deviation of a position of an own vehicle from the target travel route.

In this regard, with the above-described configuration, the target travel route is color-coded in accordance with a positional deviation of an own vehicle from the target travel route. Accordingly, such an increased positional deviation as described above can be reflected in color-coding of the target travel route.

Further, the work vehicle further comprises an index-value display device which is configured to display the index value on the display.

With this configuration, an index value indicating a real-time deviation of an actual travel track from the target travel route may be displayed on the display, so that an operator can properly grasp a deviation of an actual travel track from the target travel route.

Further, the index-value display device is configured to display the index value in any of a plurality of colors including a first color and a second color, on the display, in accordance with a magnitude of the index value, and that the color-coding operation device is configured to color-code in the first color, a section where the index value is displayed in the first color, and color-code in the second color, a section where the index value is displayed in the second color, in a portion where the work vehicle has traveled in the target travel route displayed on the display.

With this configuration, an index value indicating a real-time deviation of an actual travel track from the target travel route may be represented in the same color as a deviation of an actual travel track from the target travel route in a portion where the work vehicle has traveled. This can make it easy for an operator to intuitively grasp a deviation of an actual travel track from the target travel route.

Further, it is preferable in the present disclosure that the work vehicle further comprises a remaining-time display device which is configured to display an estimated value of a remaining time before the work vehicle finishes traveling along a whole of the target travel route, on the display.

With this configuration, an operator can properly grasp a time required for work.

Further, according to another aspect, a method according to claim 6 is provided.

According to yet another aspect, a computer program product, according to claim 7, is provided. The computer program product comprises computer-readable instructions that, when loaded and run on a computer, cause the computer to perform the method according to claim 6.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of Drawings]

Details of one or more implementations are set forth in the exemplary drawings and description below. Other features will be apparent from the description, the drawings, and from the claims.

Fig. 1 is a left-side view of an exemplary tractor.
Fig. 2 is a plan view of a principal part when traversed, for showing an exemplary configuration of a cab part.
Fig. 3 is a view showing an exemplary configuration of a terminal device.
Fig. 4 is an enlarged view of the terminal device, for showing an exemplary configuration including a first touch button, a second touch button, a first physical button, and a second physical button.
Fig. 5 is a block diagram showing an exemplary configuration for control of a displaying operation of a display.
Fig. 6 is a view showing an example of what is displayed on the display when movement to a starting position of work travel is made.
Fig. 7 is a view showing an example of what is displayed on the display at a starting time of work travel.
Fig. 8 is a view showing an example of what is displayed on the display during work travel.
Fig. 9 is a view showing another example of what is displayed on the display during work travel.
Fig. 10 is a view showing yet another example of what is displayed on the display during work travel.
Fig. 11 is a view showing an exemplary guide start area in another embodiment.
Fig. 12 is a view showing an exemplary guide start area in yet another embodiment.
Fig. 13 is a view showing an exemplary guide start area in yet another embodiment.

### [Description of Embodiments]

Embodiments for carrying out the present invention will be described with reference to the drawings. It should be understood that various modifications to the examples may be made. It is noted that unless specific statement is provided, a longitudinal direction in the following description will be referred to as follows. That is, a forward direction of travel of a machine body during work travel is "front", and a backward direction of travel of a machine body during work travel is "rear". Then, a direction corresponding to a right side with respect to a forward-facing orientation in a longitudinal direction is "right", and a direction corresponding to a left side is "left".

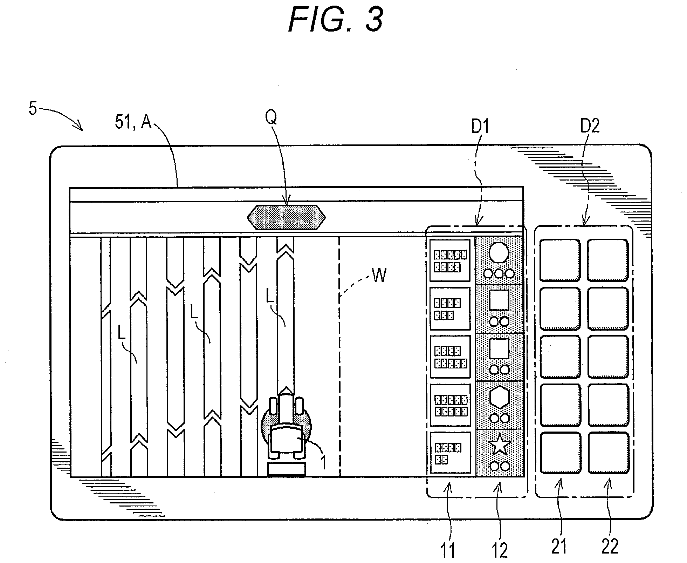

Also, in the description regarding Figs. 3, 4, and 6 to 10, a rightward direction with respect to one who faces a paper sheet is "right", and a leftward direction with respect to one who faces a paper sheet is "left".

### [Overall configuration of tractor]

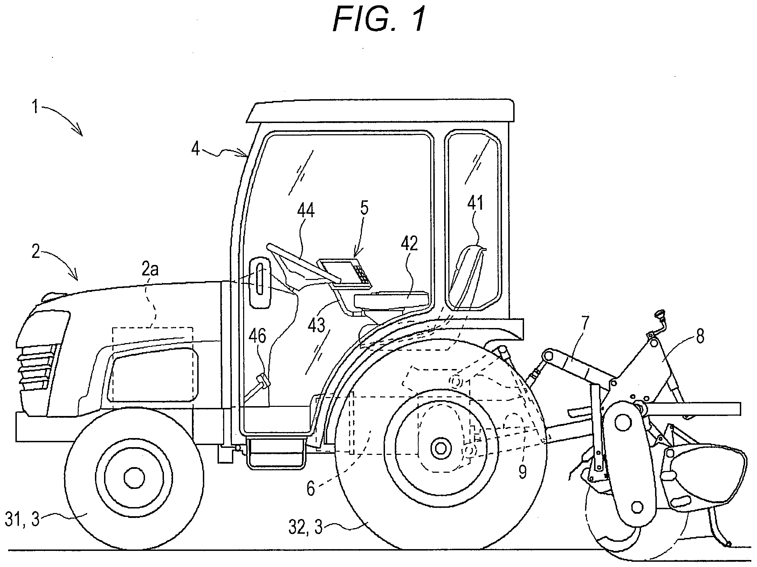

Fig. 1 is a view showing a configuration of a tractor 1 which is one example of a work vehicle. The exemplary tractor 1 may be configured so as to be capable of travelling and working by automatic driving.

As shown in Fig. 1, a prime mover part 2 may be provided in a front portion of a machine body of the tractor 1. The prime mover part 2 may include an engine 2a. Also, the tractor 1 may include a wheel-type travel device 3. The travel device 3 may include a pair of right and left front wheels 31 and a pair of right and left rear wheels 32.

Motive power of the engine 2a may be transmitted to the pair of right and left front wheels 31 and the pair of right and left rear wheels 32 via a main clutch (not shown) and a transmission 6. Then, the transmitted motive power may drive the pair of right and left front wheels 31 and the pair of right and left rear wheels 32.

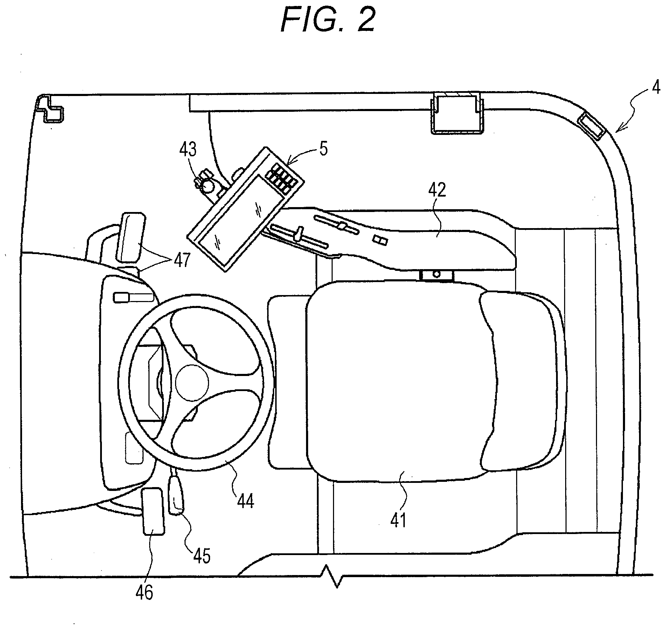

A cab part 4 may be provided in the rear of the prime mover part 2. As shown in Figs. 1 and 2, the cab part 4 may include a driver's seat 41, an arm rest 42, a supporting arm 43, a steering wheel 44, a shuttle lever 45, a clutch pedal 46, right and left brake pedals 47, and/or a terminal device 5. In the cab part 4, an operator can perform various driving operations manually.

As shown in Figs. 1 and 2, the terminal device 5 may be supported by the supporting arm 43. Also, an operator can perform a steering operation on the pair of right and left front wheels 31 by operating the steering wheel 44.

Also, an operator can switch the tractor 1 between forward movement and backward movement by operating the shuttle lever 45.

Also, an operator can perform an on/off operation of the main clutch by operating the clutch pedal 46.

Also, an operator can operate right and left side brakes by operating the right and left brake pedals 47.

As shown in Fig. 1, a cultivator 8 may be attached to a rear portion of the tractor 1 via a lifting-up/down mechanism 7. Motive power of the engine 2a may be transmitted to the cultivator 8 via a PTO shaft 9. Then, the transmitted motive power may drive the cultivator 8.

The tractor 1 may travel while driving the cultivator 8, so that work travel can be achieved.

### [Configuration of terminal device]

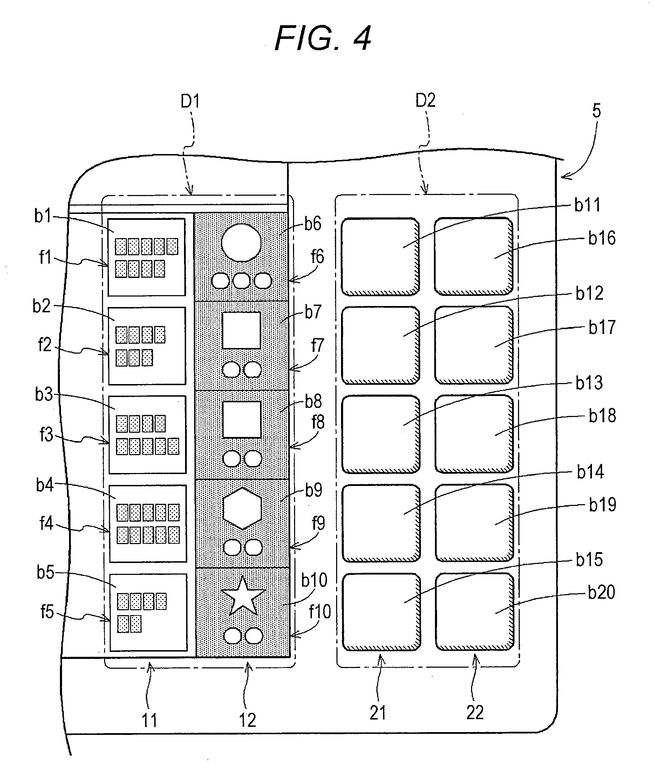

Figs. 3 and 4 are views showing an example of the terminal device 5 during work travel which may be performed by automatic driving. In this exemplary case, five first touch buttons 11 and five second touch buttons 12 each in vertical arrangement are displayed in a right end portion of a display 51 included in the terminal device 5. Different functions may be assigned to the five first touch buttons 11 and the five second touch buttons 12, respectively.

Also, the display 51 may be of a touch-panel type. An operator may perform a touch operation on any one of the five first touch buttons 11 and the five second touch buttons 12, to thereby cause a function assigned to the one button being touched, to be fulfilled.

Also, work information which may be information about work may be displayed on the display 51. In an example shown in Fig. 3, as work information, a position of the tractor 1 in a work field W where work travel is performed, and a target travel route L in the work field W are displayed in a map form on the display 51.

As shown in Figs. 3 and 4, the terminal device 5 may include five first physical buttons 21 and five second physical buttons 22 which may be provided outside the display 51. The five first physical buttons 21 and the five second physical buttons 22 may be provided each in vertical arrangement.

Different functions may be assigned to the five first physical buttons 21 and the five second physical buttons 22, respectively. An operator may press any one of the five first physical buttons 21 and the five second physical buttons 22, to thereby cause a function assigned to the one button being pressed, to be fulfilled.

As shown in Figs. 3 and 4, the five first touch buttons 11 may include a first button b1, a second button b2, a third button b3, a fourth button b4, and a fifth button b5. Also, the five second touch buttons 12 may include a sixth button b6, a seventh button b7, an eighth button b8, a ninth button b9, and a tenth button b10.

Also, as shown in Figs. 3 and 4, the five first physical buttons 21 may include an eleventh button b11, a twelfth button b12, a thirteenth button b13, a fourteenth button b14, and a fifteenth button b15. Also, the five second physical buttons 22 may include a sixteenth button b16, a seventeenth button b17, an eighteenth button b18, a nineteenth button b19, and a twentieth button b20.

As shown in Figs. 3 and 4, arrangement of the five first touch buttons 11 may correspond to arrangement of the five first physical buttons 21. Also, arrangement of the five second touch buttons 12 may correspond to arrangement of the five second physical buttons 22.

Also, as shown in Figs. 3 and 4, the five second touch buttons 12 may be displayed adjacently to the five first touch buttons 11. Further, the five second physical buttons 22 may be provided adjacently to the five first physical buttons 21. Then, a touch-button display area D1 where the five first touch buttons 11 and the five second touch buttons 12 may be displayed and a physical-button placement area D2 where the five first physical buttons 21 and the five second physical buttons 22 may be placed, may be adjacent to each other.

The same functions as assigned to the five first touch buttons 11 may be assigned to the five first physical buttons 21. Also, the same functions as assigned to the five second touch buttons 12 may be assigned to the five second physical buttons 22.

More specifically, the same function may be assigned to the first button b1 and the eleventh button b11. Also, the same function may be assigned to the second button b2 and the twelfth button b12. Then, similarly, the same functions may be assigned to the third button b3 and the thirteenth button b13, the fourth button b4 and the fourteenth button b14, the fifth button b5 and the fifteenth button b15, the sixth button b6 and the sixteenth button b16, the seventh button b7 and the seventeenth button b17, the eighth button b8 and the eighteenth button b18, the ninth button b9 and the nineteenth button b19, and the tenth button b10 and the twentieth button b20, respectively.

For example, to each of the five first physical buttons 21, the same function of one out of the five first touch buttons 11, which may positionally correspond thereto, may be assigned. Also, to each of the five second physical buttons 22, the same function of one out of the five second touch buttons 12, which may positionally correspond thereto, may be assigned.

Also, as shown in Figs. 3 and 4, the first to fifth buttons b1 to b5 may include first to fifth function display parts f1 to f 5, respectively. Also, the sixth to tenth buttons b6 to b10 may include sixth to tenth function display parts f6 to f10, respectively.

The first to tenth function display parts f1 to f10 may display functions assigned to the first to tenth buttons b1 to b10, respectively.

Also, as described above, functions of the first to tenth buttons b1 to b10 may correspond to functions of the eleventh to twentieth buttons b11 to b20, respectively. This may result in that the first to tenth function display parts f1 to fl0 also display functions assigned to the eleventh to twentieth buttons b11 to b20, respectively.

### [Control device]

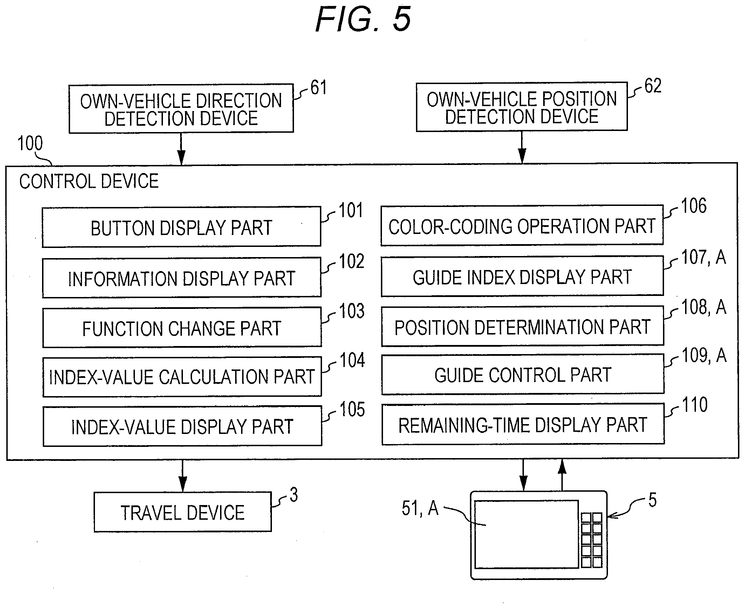

Fig. 5 shows examples of an own-vehicle direction detection device 61, an own-vehicle position detection device 62, and a control device 100. In an exemplary embodiment, all of the own-vehicle direction detection device 61, the own-vehicle position detection device 62, and the control device 100 may be included in the tractor 1.

The own-vehicle direction detection device 61 may detect a direction in which an own vehicle travels. Also, the own-vehicle position detection device 62 may detect a position of an own vehicle.

As shown in Fig. 5, the control device 100 may receive various signals from the own-vehicle direction detection device 61, the own-vehicle position detection device 62, and/or the terminal device 5. Then, the control device 100 may output a predetermined signal to the travel device 3 and/or to the terminal device 5, based on the received various signals. The control device 100 may be implemented using one or more processors and one or more storage devices, such as a memory, coupled to the one or more processors.

Also, as shown in Fig. 5, the control device 100 may include a button display part 101, an information display part 102, a function change part 103, an index-value calculation part 104 (which may be understood as being equivalent to an "index-value calculation device" according to various aspects and examples as described herein), an index-value display part 105 (which may be understood as being equivalent to an "index-value display device" according to various aspects and examples as described herein), a color-coding operation part 106 (which may be understood as being equivalent to a "color-coding operation device" according to various aspects and examples as described herein), a guide index display part 107, a position determination part 108, a guide control part 109, and/or a remaining-time display part 110 (which may be understood as being equivalent to a "remaining-time display device" according to various aspects and examples as described herein).

Also, as shown in Figs. 3 and 5, the tractor 1 may include a travel control device A which controls travel of the tractor 1. The travel control device A may include the display 51, the guide index display part 107, the position determination part 108, and the guide control part 109, for example.

The button display part 101 may be configured to display the five first touch buttons 11 in vertical arrangement on the display 51. Also, the button display part 101 may be configured to display the five second touch buttons 12 in vertical arrangement and on the right of the five first touch buttons 11 on the display 51.

The information display part 102 may be configured to display work information on the display 51. For example, in Fig. 3, a position of the tractor 1 in the work field W where work travel is performed and the target travel route L in the work field W may be displayed as work information on the display 51, by the information display part 102.

Below, exemplary actions of respective parts of the control device 100 will be described, following an exemplary procedure of work travel of the tractor 1, which may be performed by automatic driving.

### [Movement to starting position of work travel]

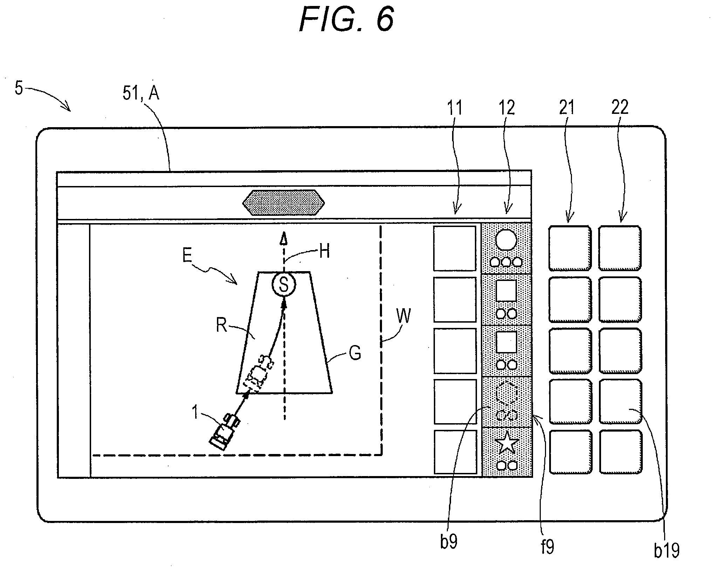

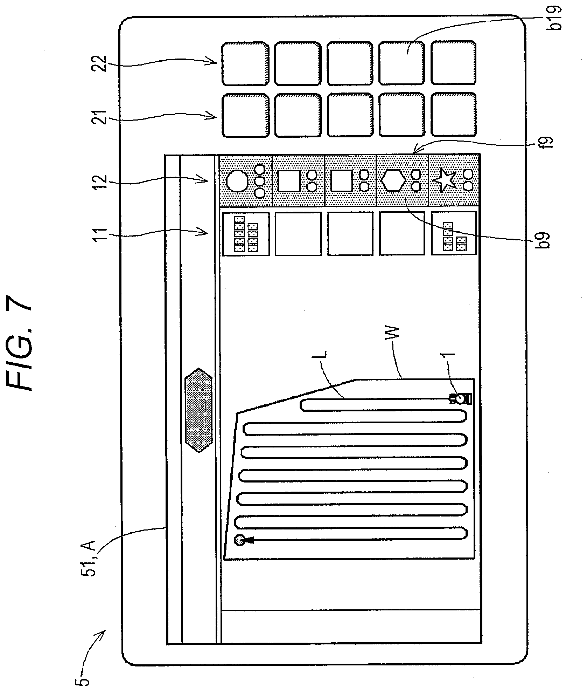

First, referring to Figs. 6 and 7, exemplary movement of the tractor 1 to a starting position S of work travel will be described.

In conducting work in the work field W using the tractor 1, an operator may activate the terminal device 5, first. Then, the operator may provide inputs for various settings using the terminal device 5. At that time, the operator may provide inputs for settings of a lap width of cultivation, the number of revolutions of the engine 2a, and the like, for example.

When inputting for various settings are completed, a current location of the tractor 1 and a guide index E may be displayed on the display 51, as shown in Fig. 6. The guide index E may be displayed on the display 51 by the guide index display part 107. Also, the guide index E may correspond to a guide start area R which may be defined within the work field W.

The guide index E may include a figure G and a direction indication symbol H. The figure G may represent a position and a shape of the guide start area R. Also, the direction indication symbol H may represent a direction of travel of the tractor 1 at a starting time of work travel. A position of the direction indication symbol H displayed on the display 51 may correspond to a position of the guide start area R in the work field W.

As shown in Fig. 6, in the present embodiment, the guide start area R may be in a trapezoidal shape. Accordingly, also the figure G displayed on the display 51 may be in a trapezoidal shape. Also, in the present embodiment, the guide start area R may have a shape which becomes narrower as it becomes closer to a front end in a direction of travel of the tractor 1 at a starting time of work travel.

The position determination part 108 shown in Fig. 5 may be configured to determine whether or not the tractor 1 is placed within the guide start area R, based on a signal provided from the own-vehicle position detection device 62. Also, the guide control part 109 may be configured to control the travel device 3 in such a manner that the tractor 1 travels to the starting position S of work travel when the position determination part 108 determines that the tractor 1 is placed within the guide start area R.

It is noted that, for determination of whether or not the tractor 1 is placed within the guide start area R, either whether a whole of the tractor 1 is placed within the guide start area R, or whether a part of the tractor 1 is placed within the guide start area R, may be determined.

Also, the guide index display part 107 shown in Fig. 5 can switch a display state of the guide index E between a first display state and a second display state. In a case where the position determination part 108 determines that the tractor 1 is not placed within the guide start area R, a display state of the guide index E may become the first display state. On the other hand, in a case where the position determination part 108 determines that the tractor 1 is placed within the guide start area R, a display state of the guide index E may become the second display state.

In the present embodiment, an inside of the figure G in the first display state may be displayed in orange. Also, the inside of the figure G in the second display state may be displayed in green. That is, a color of the guide index E in the first display state and a color of the guide index E in the second display state may be different from each other.

As a result of this, an operator can grasp whether or not the tractor 1 is placed within the guide start area R.

In a case where the tractor 1 is placed in a position indicated by a solid line in Fig. 6, the position determination part 108 may determine that the tractor 1 is not placed within the guide start area R. Accordingly, at that time, the guide control part 109 does not necessarily control the travel device 3. Also, at that time, the inside of the figure G may be displayed in orange by the guide index display part 107.

Then, when an operator manually drives the tractor 1 and the tractor 1 reaches a position indicated by a broken line in Fig. 6, the position determination part 108 may determine that the tractor 1 is placed within the guide start area R. As a result of this, the guide control part 109 may start controlling the travel device 3. Also, at that time, the guide index display part 107 may change a color of the inside of the figure G from orange to green.

It is noted that at that time, the tractor 1 may be configured to move to the position indicated by the broken line in Fig. 6 not manually, but by automatic driving.

Then, the guide control part 109 may control the travel device 3, so that the tractor 1 automatically travels from the position indicated by the broken line in Fig. 6 to the starting position S. As a result of this, movement of the tractor 1 to the starting position S may be completed.

When movement of the tractor 1 to the starting position S is completed, a whole of the target travel route L in the work field W may be displayed on the display 51, as shown in Fig. 7. Additionally, the tractor 1 may be placed in the starting position S in Fig. 7.

Also, in a state shown in Fig. 6, characters "next" (not shown) may be displayed faintly at the ninth function display part f9 of the ninth button b9 in the present embodiment. On the other hand, in a state shown in Fig. 7, characters "next" (not shown) may be displayed thickly at the ninth function display part f9 of the ninth button b9.

In a state shown in Fig. 6, both of operations of the ninth button b9 and the nineteenth button b19 may be invalid. Also, in a state shown in Fig. 7, both of operations of the ninth button b9 and the nineteenth button b19 may be valid.

Thus, the button display part 101 can switch a display state of the second touch button 12 between the first display state and the second display state. Then, in a case where a display state of the second touch button 12 is the first display state, both of operations of the second touch button 12 and the second physical button 22 may be valid.

Also, in a case where a display state of the second touch button 12 is the second display state, both of operations of the second touch button 12 and the second physical button 22 may be invalid.

More specifically, in a case where a display state of a certain second touch button 12 out of the five second touch buttons 12 is the first display state, characters and/or symbols may be displayed thickly at the certain second touch button 12. At that time, both of operations of the certain second touch button 12 and one of the second physical buttons 22 which corresponds to the certain second touch button 12 may be valid.

Also, in a case where a display state of a certain second touch button 12 out of the five second touch buttons 12 is the second display state, characters and/or symbols may be displayed faintly at the certain second touch button 12. At that time, operations of the certain second touch button 12 and one of the second physical buttons 22 which corresponds to the certain second touch button 12 may be invalid.

### [Function of each button during work travel]

Next, referring to Figs. 3, 4, and 8 to 10, exemplary functions of the first to twentieth buttons b1 to b20 which are fulfilled while the tractor 1 is travelling and working, will be described.

After movement of the tractor 1 to the starting position S is completed, upon an operator's press of a driving start button (not shown) included in the tractor 1, work travel by automatic driving may be started. Figs. 3, 4, and 8 to 10 show the exemplary terminal device 5 during work travel of the tractor 1.

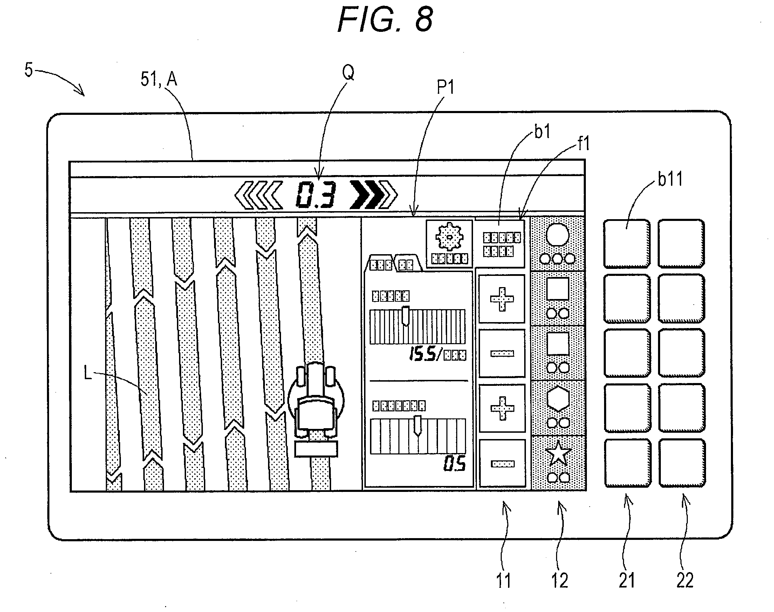

While the tractor 1 is travelling and working, characters "change of setting" (not shown) may be displayed at the first function display part f1 of the first button b1 in the present embodiment, though Figs. 3, 4, and 8 provide schematic illustration. In a state shown in Fig. 3, when an operator operates the first button b1 or the eleventh button b11, a setting change window P1 may be displayed as shown in Fig. 8.

In the setting change window P1, a current vehicle speed of the tractor 1 and a depth of plowing may be displayed. Additionally, each of the vehicle speed and the depth of plowing may be considered as one kind of the above-described work information.

Also, while the tractor 1 is traveling and working, characters "display of state" (not shown) may be displayed at the second function display part f2 of the second button b2 in the present embodiment, though Figs. 3 and 4 provide schematic illustration. Also, characters "recording of work" (not shown) may be displayed at the third function display part f3 of the third button b3. Also, characters "display of track" (not shown) may be displayed at the fourth function display part f4 of the fourth button b4. Also, characters "erasing of track" (not shown) may be displayed at the fifth function display part f5 of the fifth button f5.

When the setting change window P1 is displayed, what is displayed at the second function display part f2 of the second button b2 shown in Figs. 3 and 4 may be changed from characters "display of state" to a symbol "+" as shown in Fig. 8. Also, at the same time, what is displayed at the third function display part f3 may be changed from "recording of work" to "-", what is displayed at the fourth function display part f4 may be changed from "display of track" to "+", and what is displayed at the fifth function display part f5 may be changed from "erasing of track" to "-".

Also, at that time, respective functions assigned to the five first touch buttons 11 and the five first physical buttons 21 may be changed.

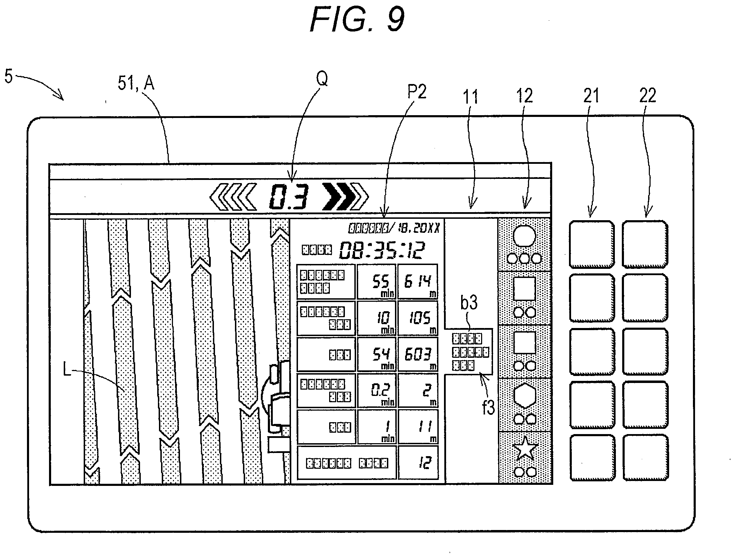

As shown in Fig. 3, when the setting change window P1 is not displayed, a function of the first button b1 and the eleventh button b11 may be to open the setting change window P1. Also, a function of the second button b2 and the twelfth button b12 may be to display a state of a vehicle, such as an oil temperature of the transmission 6. Also, a function of the third button b3 and the thirteenth button b13 may be to open a work situation window P2 shown in Fig. 9. Also, a function of the fourth button b4 and the fourteenth button b14 may be to display a travel track of the tractor 1. Also, a function of the fifth button b5 and the fifteenth button b15 may be to erase a recorded travel track of the tractor 1.

On the other hand, as shown in Fig. 8, when the setting change window P1 is displayed, a function of the first button b1 and the eleventh button b11 may be to close the setting change window P1. Also, a function of the second button b2 and the twelfth button b12 may be to increase a set vehicle speed of the tractor 1. Also, a function of the third button b3 and the thirteenth button b13 may be to reduce a set vehicle speed of the tractor 1. Also, a function of the fourth button b4 and the fourteenth button b14 may be to increase a depth of plowing of the tractor 1. Also, a function of the fifth button b5 and the fifteenth button b15 may be to reduce a depth of plowing of the tractor 1.

That is, when the setting change window P1 is displayed, functions assigned to the five first touch buttons 11 and the five first physical buttons 21 may be changed, respectively. Then, such a change in function may be carried out by the function change part 103 in accordance with work information displayed on the display 51.

Thus, the function change part 103 may be configured to change respective functions assigned to the five first touch buttons 11 and the five first physical buttons 21 in accordance with work information displayed on the display 51.

Also, while the tractor 1 is travelling and working, characters "current location" (not shown) may be displayed at the sixth function display part f6 of the sixth button b6 out of the five second touch buttons 12 in the present embodiment, though Figs. 3 and 4 provide schematic illustration. Also, characters "enlargement" (not shown) may be displayed at the seventh function display part f7 of the seventh button b7. Also, characters "reduction" (not shown) may be displayed at the eighth function display part f8 of the eighth button b8. Also, characters "next" (not shown) may be displayed at the ninth function display part f9 of the ninth button b9. Also, characters "return" (not shown) may be displayed at the tenth function display part f10 of the tenth button b10.

Then, as shown in Fig. 8, even when the setting change window P1 is displayed, what is displayed at the sixth function display part f6, the seventh function display part f7, the eighth function display part f8, the ninth function display part f9, and/or the tenth function display part f10 of the five second touch buttons 12 is not necessarily changed.

Also, respective functions assigned to the five second touch buttons 12 and the five second physical buttons 22 may be unchanged irrespective of whether or not the setting change window P1 is displayed.

More specifically, as shown in Figs. 3, 4, and 8, in both of a case where the setting change window P1 is displayed and a case where the setting change window P1 is not displayed, a function of the sixth button b6 and the sixteenth button b16 may be to display a current location of the tractor 1 in the work field W. Also, a function of the seventh button b7 and the seventeenth button b17 may be to enlarge map display of the work field W on the display 51. Also, a function of the eighth button b8 and the eighteenth button b18 may be to reduce map display of the work field W on the display 51. Also, a function of the ninth button b9 and the nineteenth button b19 may be to allow message display, display for various settings, or the like on the display 51 to proceed to a next screen. Also, a function of the tenth button b10 and the twentieth button b20 may be to return to a preceding screen.

Thus, respective functions assigned to the five second touch buttons 12 and the five second physical button 22 may be unchanged irrespective of work information displayed on the display 51.

Also, in the example shown in Fig. 8, all of the first touch buttons 11 are displayed on the display 51. On the other hand, as shown in Fig. 9, when the work situation window P2 is displayed, the first button b1, the second button b2, the fourth button b4, and the fifth button b5 out of the five first touch buttons 11 are not necessarily displayed on the display 51.

Then, in a state shown in Fig. 8, all of operations of the five first touch buttons 11 may be valid. On the other hand, in a state shown in Fig. 9, all of operations of the first button b1, the second button b2, the fourth button b4, and the fifth button b5 out of the five first touch buttons 11 may be invalid. Also, in a state shown in Fig. 9, all of operations of the eleventh button b11, the twelfth button b12, the fourteenth button b14, and the fifteenth button b15 may be invalid.

Thus, the button display part 101 can switch a display state of the first touch button 11 between the first display state and the second display state. Then, in a case where a display state of the first touch button 11 is the first display state, both of operations of the first touch button 11 and the first physical button 21 may be valid.

Also, in a case where a display state of the first touch button 11 is the second display state, both of operations of the first touch button 11 and the first physical button 21 may be invalid.

More specifically, in a case where a display state of a certain first touch button 11 out of the five first touch buttons 11 is the first display state, the certain first touch button 11 may be displayed on the display 51. At that time, both operations of the certain first touch button 11 and one of the first physical buttons 21 which corresponds to the certain first touch button 11 may be valid.

Also, in a case where a display state of a certain first touch button 11 out of the five first touch buttons 11 is the second display state, the certain first touch button 11 is not necessarily displayed on the display 51. At that time, both of operations of the certain first touch button 11 and one of the first physical buttons 21 which corresponds to the certain first touch button 11 may be invalid.

### [Display of index value during work travel]

As shown in Fig. 3 and Figs. 8 to 10, an index-value display area Q may be located in an upper portion of the display 51. In the index-value display area Q, an index value may indicate a degree of deviation of an actual travel track from the target travel route L.

In some examples of the present embodiment, the foregoing index value is a directional deviation which may be a deviation of travel direction of an own vehicle from a direction of the target travel route L. It is noted that the index value is not limited to a directional deviation, and may be a positional deviation of an own vehicle from the target travel route L.

In the present embodiment, a directional deviation serving as an index value may be calculated by the index-value calculation part 104 based on a signal provided from the own-vehicle direction detection device 61. Then, the calculated directional deviation may be displayed in the index-value display area Q by the index-value display part 105. It is noted that what is displayed in the index-value display area Q by the index-value display part 105 is not limited to a number. The index-value display part 105 can display also an indicator or the like which indicates a direction of deviation or an amount of directional deviation, in the index-value display area Q.

Also, the index-value display part 105 may be configured to display a directional deviation in any of colors of green, yellow (which may be understood as being equivalent to a "first color" according to various aspects and examples as described herein), and red (which may be understood as being equivalent to a "second color" according to various aspects and examples as described herein), on the display 51, in accordance with an amount of a directional deviation. More specifically, a color of a directional deviation which is displayed may be green when a directional deviation is relatively small, may be yellow when a directional deviation is moderate, and may be red when a directional deviation is relatively large. For example, the directional deviation may be displayed: in green when the directional deviation is smaller than a first (predetermined or predeterminable) threshold value; in orange when the directional deviation is in between the first threshold value and a second (predetermined or predeterminable) threshold value that is greater than the first threshold value; or in red when the directional deviation is greater than the second threshold value.

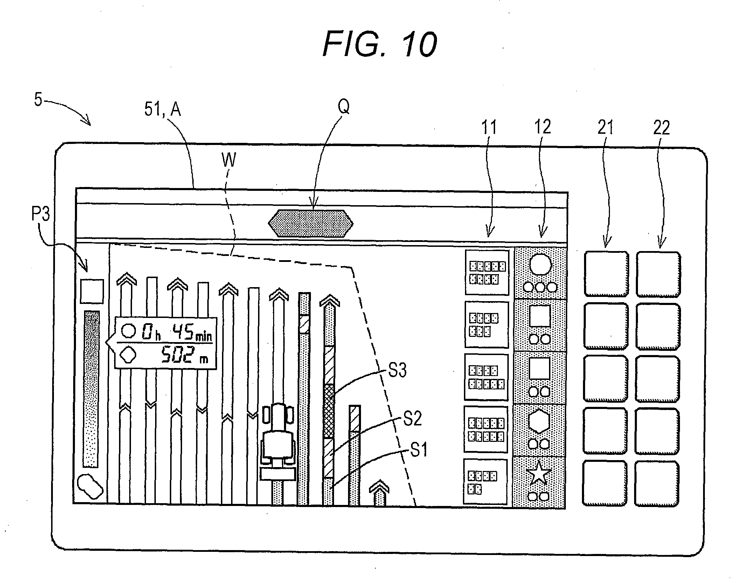

In the examples shown in Figs. 3 and 10, in a case where a directional deviation is relatively small (e.g. smaller than the first threshold value), no number is displayed in the index-value display area Q. At that time, for example, a green indicator in a shape of a hexagon which is horizontally lengthened may be displayed in the index-value display area Q by the index-value display part 105. This indicator may inform an operator that a current directional deviation is relatively small. That is, the indicator may serve to display a directional deviation.

Also, as shown in Figs. 8 and 9, in a case where a directional deviation is moderate (e.g. between the first and second threshold values) or relatively large (e.g. greater than the second threshold value), a number indicating a directional deviation may be displayed in the index-value display area Q by the index-value display part 105. Also, at that time, an indicator indicating a direction and an amount of deviation may be displayed in a position adjacent to the number indicating a directional deviation by the index-value display part 105. In the examples shown in Figs. 8 and 9, the indicator indicates that a travel direction of an own vehicle deviates rightward from a direction of the target travel route L.

Then, such a number and indicator as described above may be displayed in yellow when a directional deviation is moderate, and may be displayed in red when a directional deviation is relatively large. In some circumstances, in response to the number and/or indicator being displayed in yellow or red, an operator of the tractor 1 may operate the steering wheel 44 to reduce the directional deviation. Further, for example, if the tractor 1 is driven automatically, an operator of the tractor 1 may switch from automatic driving to manual driving in response to the number and/or indicator being displayed in yellow or red. The operator then may manually operate the tractor 1 (e.g. using the steering wheel 44) to reduce the directional deviation.

The color-coding operation part 106 shown in Fig. 5 may be configured to color-code a portion which the tractor 1 has traveled in the target travel route L displayed on the display 51, with the use of colors of green, yellow, and red, as shown in Fig. 10.

More specifically, the color-coding operation part 106 may color-code in green, a section where a directional deviation is displayed in green, color-code in yellow, a section where a directional deviation is displayed in yellow, and color-code in red, a section where a directional deviation is displayed in red, in the index-value display area Q.

In the present embodiment, assume that a directional deviation is displayed in green in the index-value display area Q when the tractor 1 travels a first section s1 shown in Fig. 10. Also, assume that a directional deviation is displayed in yellow in the index-value display area Q when the tractor 1 travels a second section s2 shown in Fig. 10. Also, assume that a directional deviation is displayed in red in the index-value display area Q when the tractor 1 travels a third section s3 shown in Fig. 10.

In this exemplary case, as shown in Fig. 10, the first section s1 in the target travel route L displayed on the display 51 is color-coded in green. Also, in this exemplary case, the second section s2 is color-coded in yellow. Also, in this exemplary case, the third section s3 is color-coded in red.

Thus, the color-coding operation part 106 may be configured to color-code a portion where the tractor 1 has traveled in the target travel route L displayed on the display 51, in accordance with an index value.

As shown in Fig. 10, the display 51 can display a remaining-time display window P3. In the remaining-time display window P3, an estimated value of remaining time before the tractor 1 finishes travelling a whole of the target travel route L is displayed.

The estimated value of remaining time may be displayed on the display 51 by the remaining-time display part 110 shown in Fig. 5.

### [Other embodiments]

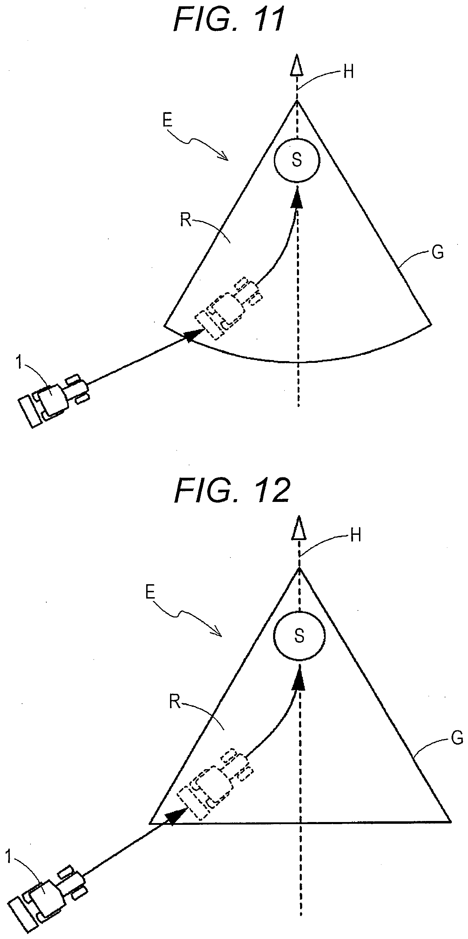

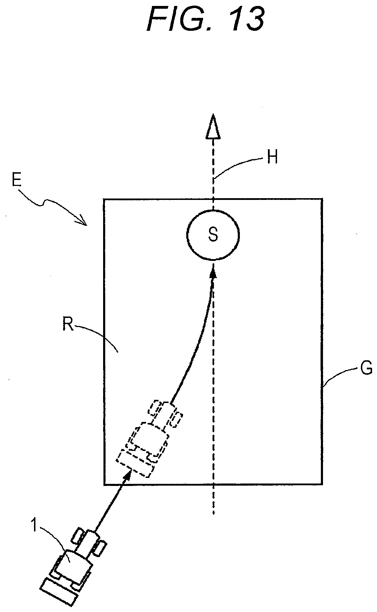

(1) In the above-described embodiment, the exemplary guide start area R is in a trapezoidal shape as shown in Fig. 6. For this reason, also the figure G displayed on the display 51 is in a trapezoidal shape. However, in place of this configuration, there may be provided a configuration in which the guide start area R is in a shape of sector and also the figure G displayed on the display 51 is in a shape of sector as shown in Fig. 11. Also, there may be provided a configuration in which the guide start area R is a triangular shape and also the figure G displayed on the display 51 is in a triangular shape, as shown in Fig. 12. Also, there may be provided a configuration in which the guide start area R is a rectangular shape and also the figure G displayed on the display 51 is in a rectangular shape, as shown in Fig. 13.
(2) In the above-described embodiment, the first touch buttons 11, the second touch buttons 12, the first physical buttons 21, and the second physical buttons 22 each include five buttons which are in vertical arrangement. However, in place of this configuration, there may be provided a configuration in which a plurality of the first touch buttons 11, a plurality of the second touch buttons 12, a plurality of the first physical buttons, 21, and a plurality of the second physical buttons are each provided in horizontal arrangement. Also, the number of first touch buttons 11, the second touch buttons 12, the first physical buttons 21, or the second physical buttons 22 may be six or more, and may be four or less. Also, the first touch buttons 11, the second touch buttons 12, the first physical buttons 21, and the second physical buttons 22 may each include one button.
(3) The second touch buttons 12 may be omitted from the terminal device 5.
(4) The second physical buttons 22 may be omitted from the terminal device 5.
(5) There may be provided a configuration in which in a case where a display state of a certain second touch button 12 out of the plurality of second touch buttons 12 is the first display state, the certain second touch button 12 is displayed on the display 51, and in a case where the display state is the second display state, the certain second touch button 12 is not displayed on the display 51.
(6) There may be provided a configuration in which in a case where a display state of a certain first touch button 11 out of the plurality of first touch buttons 11 is the first display state, characters and/or symbols are displayed thickly at the certain first touch button 11, and in a case where the display state is the second display state, characters and/or symbols are displayed faintly at the certain first touch button 11.
(7) There may be provided a configuration in which each of display states of the plurality of first touch buttons 11 cannot be switched between the first display state and the second display state.
(8) There may be provided a configuration in which each of display states of the plurality of second touch buttons 12 cannot be switched between the first display state and the second display state.
(9) The plurality of first touch buttons 11 and the plurality of second touch buttons 12 are not necessarily required to be adjacent to each other. For example, there may be provided a configuration in which the plurality of first touch buttons 11 are placed in a left end portion of the display 51 and the plurality of the second touch buttons 12 are placed in a right end portion of the display 51.
(10) The touch-button display area D1 and the physical-button placement area D2 are not necessarily required to be adjacent to each other. For example, there may be provided a configuration in which the touch-button display area D1 is placed in a left end portion of the display 51 and the physical-button placement area D2 is placed in a position on the right of the display 51.
(11) The travel device 3 may be of either a crawler type or a semi-crawler type.
(12) A color of an inside of the figure G in a case where a display state of the guide index E is the first display state may be displayed in other colors than orange.
(13) A color of an inside of the figure G in a case where a display state of the guide index E is the second display state may be displayed in other colors than green.
(14) A color of the guide index E in the first display state and a color of the guide index E in the second display state may be identical to each other. In such a case, there may be provided a configuration in which the guide index E in the first display state is displayed in a blinking state, and the guide index E in the second display state is displayed in a simply-lighted-up state, for example.
(15) There may be provided a configuration in which a display state of the guide index E cannot be switched between the first display state and the second display state.
(16) The guide index E may include only the direction indication symbol H out of the figure G and the direction indication symbol H. In other words, there may be provided a configuration in which only the direction indication symbol H is displayed on the display 51 and the figure G is not displayed.
(17) The guide index E may include only the figure G out of the figure G and the direction indication symbol H. In other words, there may be provided a configuration in which only the figure G is displayed on the display 51 and the direction indication symbol H is not displayed.
(18) The own-vehicle direction detection device 61 may be omitted from the work vehicle.
(19) The own-vehicle position detection device 62 may be omitted from the work vehicle.
(20) There may be provided a configuration in which no index value is displayed on the display 51.
(21) A color of an index value displayed on the display 51 may be consistently unchanged irrespective of a magnitude of an index value.
(22) The color-coding operation part 106 may be configured so as to color-code the target travel route L independently of a color of an index value displayed on the display 51.
(23) A color of an index value displayed on the display 51 may be any of the other colors than green, yellow, and red.
(24) Color-coding performed by the color-coding operation part 106 is not limited to a color-coding pattern in the above-described embodiment. For example, there may be provided a configuration in which the target travel route L is color-coded in other combinations of colors than a combination of green, yellow, and red. Also, there may be provided a configuration in which the target travel route L is color-coded in two colors, or a configuration in which the target travel route L is color-coded in four or more colors.
(25) The remaining-time display part 110 may be omitted from the control device 100.
(26) The tractor 1 may be configured such that work travel by automatic driving cannot be performed and only manual work travel can be performed.
(27) While the above-described embodiment describes an example in which the display 51 and the control device 100 are provided so as to be fixed to a work vehicle, a configuration is not limited to that in the foregoing example. There may be provided a configuration in which the display 51 and the control device 100 are provided in a portable terminal apparatus that an operator can carry. Alternatively, there may be provided a configuration in which the display 51 and the control device 100 are provided in a ground-based controller for management which is installed at a location remote from a work vehicle. As a result of this, the same functions as described above can be fulfilled in a portable terminal apparatus or a ground-based controller for management.

One or more of the variations (1) to (27) as stated above may be applied to the exemplary embodiment as described above with reference to Figs. 1 to 10.

### [Industrial Applicability]

The present invention is applicable to a head-feeding combine-harvester, a normal-type combine-harvester, a corn harvester, a rice transplanting machine, and the like, in addition to a tractor.

### [Reference Signs List]

- 1:: tractor (work vehicle)
- 51:: display
- 61:: own-vehicle direction detection device
- 62:: own-vehicle position detection device
- 104:: index-value calculation part (index-value calculation device)
- 105:: index-value display part (index-value display device)
- 106:: color-coding operation part (color-coding operation device)
- 110:: remaining-time display part (remaining-time display device)
- L:: target travel route
- W:: work field

## Claims

1. A system for informing an operator of a work vehicle where an actual travel track deviates from a target travel route, the system comprising:
a display (51) configured to display the target travel route of the work vehicle (1) in a work field; and
a control device (100) configured to:
calculate an index value indicating a degree of a deviation of the actual travel track from the target travel route;
display the index value on the display (51) in any of a plurality of colors including a first color and a second color, in accordance with a magnitude of the index value;
**characterized in that** the control device is further configured to:
color-code, on the display (51) and in accordance with the index value, a portion of the target travel route where the work vehicle (1) has traveled;
wherein the control device (100) is further configured to color-code:
in the first color, a first section of the portion of the target travel route where the work vehicle (1) has traveled, wherein, in the first section, the index value has been displayed in the first color; and
in the second color, a second section of the portion of the target travel route where the work vehicle (1) has traveled, wherein, in the second section, the index value has been displayed in the second color.

2. A work vehicle (1) comprising the system according to claim 1.

3. The work vehicle (1) according to claim 2, further comprising:
an own-vehicle direction detection device (61) which is configured to detect a direction of travel of the work vehicle, wherein
the index value is a directional deviation which is a deviation of the direction of the travel of the work vehicle from a direction of the target travel route.

4. The work vehicle (1) according to claim 2 or 3, further comprising:
an own-vehicle position detection device (62) which is configured to detect a position of the work vehicle, wherein
the index value is a positional deviation which is a deviation of the position of the work vehicle from the target travel route.

5. The work vehicle (1) according to any of claims 2 to 4, further comprising:
a remaining-time display device (110) which is configured to display an estimated value of a remaining time before the work vehicle (1) finishes traveling along a whole of the target travel route, on the display.

6. A method of informing an operator of a work vehicle where an actual travel track deviates from a target travel route, the method comprising:
displaying, by a display (51), the target travel route of the work vehicle (1) in a work field;
calculating, by a control device (100), an index value indicating a degree of a deviation of the actual travel track from the target travel route;
displaying, by the control device (100), the index value on the display (51) in any of a plurality of colors including a first color and a second color, in accordance with a magnitude of the index value;
**characterized in that** the method further comprises:
color-coding, by the control device (100), on the display (51) and in accordance with the index value, a portion of the target travel route where the work vehicle (1) has traveled;
wherein in said step of color-coding:
a first section of the portion of the target travel route where the work vehicle (1) has traveled is color-coded in the first color, wherein, in the first section, the index value has been displayed in the first color; and
a second section of the portion of the target travel route where the work vehicle (1) has traveled is color-coded in the second color, wherein in the second section, the index value has been displayed in the second color.

7. A computer program product comprising computer-readable instructions that, when loaded and run on a computer, cause the computer to perform the method according to claim 6.

## Patentansprüche

1. System zum Informieren einer Bedienperson eines Nutz- bzw. Arbeitsfahrzeugs, wo ein tatsächlicher Fahrweg von einer Zielfahrtroute abweicht, wobei das System umfasst:
eine Anzeige (51), die konfiguriert ist, die Zielfahrtroute des Arbeitsfahrzeugs (1) in einem Arbeitsfeld anzuzeigen; und
eine Steuer- bzw. Regelvorrichtung (100), die konfiguriert ist, zum:
Berechnen eines Indexwertes, der einen Grad einer Abweichung des tatsächlichen Fahrwegs von der Zielfahrtroute angibt;
Anzeigen des Indexwerts auf der Anzeige (51) in einer von einer Mehrzahl von Farben, einschließlich einer ersten Farbe und einer zweiten Farbe, gemäß einer Größe des Indexwerts;
**dadurch gekennzeichnet, dass** die Steuer- bzw. Regelvorrichtung ferner konfiguriert ist zum:
Farbcodieren, auf der Anzeige (51) und in Übereinstimmung mit dem Indexwert, eines Abschnitts der Zielfahrtroute, auf der das Arbeitsfahrzeug (1) gefahren ist;
wobei die Steuer- bzw. Regelvorrichtung (100) ferner konfiguriert ist zum Farbcodieren:
in der ersten Farbe, eines ersten Teils des Abschnitts der Zielfahrtroute, auf der das Arbeitsfahrzeug (1) gefahren ist, wobei in dem ersten Teil der Indexwert in der ersten Farbe angezeigt worden ist; und
in der zweiten Farbe, eines zweiten Teils des Abschnitts der Zielfahrtroute, auf der das Arbeitsfahrzeug (1) gefahren ist, wobei in dem zweiten Teil der Indexwert in der zweiten Farbe angezeigt worden ist.

2. Arbeitsfahrzeug (1) umfassend das System nach Anspruch 1.

3. Arbeitsfahrzeug (1) nach Anspruch 2, ferner umfassend:
eine fahrzeugeigene Richtungserfassungsvorrichtung (61), die konfiguriert ist,
eine Fahrtrichtung des Arbeitsfahrzeugs zu erfassen, wobei der Indexwert eine Richtungsabweichung ist, die eine Abweichung der Fahrtrichtung des Arbeitsfahrzeugs von einer Richtung der Zielfahrtroute ist.

4. Arbeitsfahrzeug (1) nach Anspruch 2 oder 3, ferner umfassend:
eine fahrzeugeigene Positionserfassungsvorrichtung (62), die konfiguriert ist, eine Position des Arbeitsfahrzeugs zu erfassen, wobei
der Indexwert eine Positionsabweichung ist, die eine Abweichung der Position des Arbeitsfahrzeugs von der Zielfahrtroute ist.

5. Arbeitsfahrzeug (1) nach einem der Ansprüche 2 bis 4, ferner umfassend:
eine Restzeitanzeigevorrichtung (110), die konfiguriert ist, einen geschätzten Wert einer Restzeit, bevor das Arbeitsfahrzeug (1) die Fahrt entlang der gesamten Zielfahrtroute beendet, auf der Anzeige anzuzeigen.

6. Verfahren zum Informieren einer Bedienperson eines Arbeitsfahrzeugs, wo ein tatsächlicher Fahrweg von einer Zielfahrtroute abweicht, wobei das Verfahren umfasst:
Anzeigen, durch eine Anzeige (51), der Zielfahrtroute des Arbeitsfahrzeugs (1) in einem Arbeitsfeld;
Berechnen, durch eine Steuer- bzw. Regelvorrichtung (100), eines Indexwerts, der einen Grad einer Abweichung des tatsächlichen Fahrwegs von der Zielfahrtroute angibt;
Anzeigen, durch die Steuer- bzw. Regelvorrichtung (100), des Indexwerts auf der Anzeige (51) in einer von einer Mehrzahl von Farben, einschließlich einer ersten Farbe und einer zweiten Farbe, gemäß einer Größe des Indexwerts;
**dadurch gekennzeichnet, dass** das Verfahren ferner umfasst:
Farbcodieren, durch die Steuer- bzw. Regelvorrichtung (100), auf der Anzeige (51) und in Übereinstimmung mit dem Indexwert, eines Abschnitts der Zielfahrtroute, auf der das Arbeitsfahrzeug (1) gefahren ist;
wobei in dem Schritt des Farbcodierens:
ein erster Teil des Abschnitts der Zielfahrtroute, auf der das Arbeitsfahrzeug (1) gefahren ist, in der ersten Farbe farbcodiert wird, wobei in dem ersten Teil der Indexwert in der ersten Farbe angezeigt worden ist; und
ein zweiter Teil des Abschnitts der Zielfahrtroute, auf der das Arbeitsfahrzeug (1) gefahren ist, in der zweiten Farbe farbcodiert wird, wobei in dem zweiten Teil der Indexwert in der zweiten Farbe angezeigt worden ist.

7. Computerprogrammprodukt umfassend computerlesbare Anweisungen, die, wenn sie auf einem Computer geladen und ausgeführt werden, den Computer veranlassen, das Verfahren nach Anspruch 6 auszuführen.

## Revendications

1. Système pour informer un opérateur d'un véhicule de travail de l'endroit où une piste de déplacement réelle dévie d'un itinéraire de déplacement cible, le système comprenant :
un affichage (51) configuré pour afficher l'itinéraire de déplacement cible du véhicule de travail (1) dans un champ de travail ; et
un dispositif de commande (100) configuré pour :
calculer une valeur d'indice indiquant un degré d'une déviation de la piste de déplacement réelle de l'itinéraire de déplacement cible ;
afficher la valeur d'indice sur l'affichage (51) dans l'une quelconque d'une pluralité de couleurs incluant une première couleur et une seconde couleur,
conformément à une grandeur de la valeur d'indice ;
**caractérisé en ce que** le dispositif de commande est en outre configuré pour :
attribuer un code couleur, sur l'affichage (51) et conformément à la valeur d'indice, à une portion de l'itinéraire de déplacement cible où le véhicule de travail (1) s'est déplacé ;
dans lequel le dispositif de commande (100) est en outre configuré pour attribuer un code couleur :
dans la première couleur, à une première section de la portion de l'itinéraire de déplacement cible où le véhicule de travail (1) s'est déplacé, dans lequel, dans la première section, la valeur d'indice a été affichée dans la première couleur ; et
dans la seconde couleur, à une seconde section de la portion de l'itinéraire de déplacement cible où le véhicule de travail (1) s'est déplacé, dans lequel, dans la seconde section, la valeur d'indice a été affichée dans la seconde couleur.

2. Véhicule de travail (1) comprenant le système selon la revendication 1.

3. Véhicule de travail (1) selon la revendication 2, comprenant en outre :
un dispositif de détection de direction de véhicule propre (61) qui est configuré pour détecter une direction de déplacement du véhicule de travail, dans lequel la valeur d'indice est une déviation directionnelle qui est une déviation de la direction du déplacement du véhicule de travail d'une direction de l'itinéraire de déplacement cible.

4. Véhicule de travail (1) selon la revendication 2 ou 3, comprenant en outre :
un dispositif de détection de position de véhicule propre (62) qui est configuré pour détecter une position du véhicule de travail, dans lequel la valeur d'indice est une déviation positionnelle qui est une déviation de la position du véhicule de travail de l'itinéraire de déplacement cible.

5. Véhicule de travail (1) selon l'une quelconque des revendications 2 à 4, comprenant en outre :
un dispositif d'affichage de temps restant (110) qui est configuré pour afficher une valeur estimée d'un temps restant avant que le véhicule de travail (1) ne finisse de se déplacer le long d'une intégralité de l'itinéraire de déplacement cible sur l'affichage.

6. Procédé consistant à informer un opérateur d'un véhicule de travail de l'endroit
où une piste de déplacement réelle dévie d'un itinéraire de déplacement cible, le procédé comprenant :
afficher, par un affichage (51), l'itinéraire de déplacement cible du véhicule de travail (1) dans un champ de travail ;
calculer, par un dispositif de commande (100), une valeur d'indice indiquant un degré d'une déviation de la piste de déplacement réelle de l'itinéraire de déplacement cible ;
afficher, par le dispositif de commande (100), la valeur d'indice sur l'affichage (51) dans l'une quelconque d'une pluralité de couleurs incluant une première couleur et une seconde couleur, conformément à une grandeur de la valeur d'indice ;
**caractérisé en ce que** le procédé comprend en outre :
attribuer un code couleur, par le dispositif de commande (100), sur l'affichage (51) et conformément à la valeur d'indice, à une portion de l'itinéraire de déplacement cible où le véhicule de travail (1) s'est déplacé ;
dans lequel dans ladite étape de codage couleur :
une première section de la portion de l'itinéraire de déplacement cible où le véhicule de travail (1) s'est déplacé a un codage couleur dans la première couleur, dans lequel, dans la première section, la valeur d'indice a été affichée dans la première couleur ; et
une seconde section de la portion de l'itinéraire de déplacement cible où le véhicule de travail (1) s'est déplacé a un codage couleur dans la seconde couleur, dans lequel, dans la seconde section, la valeur d'indice a été affichée dans la seconde couleur.

7. Produit de programme informatique comprenant des instructions lisibles par ordinateur qui, lors de leur chargement et exécution sur un ordinateur, amènent l'ordinateur à réaliser le procédé selon la revendication 6.
